# EUROPEAN PATENT APPLICATION

(11) **EP 2 437 376 A2**
(43) Date of publication of application: **04.04.2012**
(21) Application number: 11007113.1
(22) Date of filing: 01.09.2011
(51) Int. Cl.: H02J 13/00

(54) **Power supply control apparatus, electric device, power supply control system, and power supply control method and program**

(30) Priority: 30.09.2010 JP 2010221549
(71) Applicant: Sony Corporation, Tokyo 108-0075 (JP)
(72) Inventor: Ikushima, Makoto, Tokyo 108-0075 (JP)
(74) Representative: Müller - Hoffmann & Partner

(57) **Abstract**

A power supply control apparatus includes an opening/closing unit that is used for starting or stopping power supply to an electric device, a reception unit configured to receive power-supply-control information that is transmitted from the electric device, and a control unit configured to control the opening/closing unit based on the power-supply-control information that is received by the reception unit.

## Description

### BACKGROUND

The present technology relates to a power supply control apparatus, an electric device, a power supply control system, and a power supply control method and program.

In recent years, power saving of electric devices has been progressed in association with a raise of an ecology boom and power consumption of every single electric device in its standby states (referred to below as standby power) has been decreasing.

On the other hand, in association with dissemination of various electric devices, electric devices such as a television and a video which use standby power for a timer operation and the like have been increasing. Accordingly, even though standby power of a single electric device is small, total consumption power of standby power of all electric devices is considerably large.

In such situation, such technique is proposed that power supply to respective electric devices is centrally controlled by a home server, and power supply is completely stopped when the electric devices are not used so as to eliminate generation of standby power (refer to Japanese Unexamined Patent Application Publication No. 2003-110471, for example).

### SUMMARY

However, in the above-described technique of the related art, after a user determines whether he/she uses electric devices or not, the user has to control the home server which controls power supply to the electric devices.

Accordingly, in a case where timer is set in an electric device having a timer function, as well, a user has to determine whether he/she uses the electric device, thus degrading user's convenience.

For example, in techniques of the related art, a user has to control a home server after determining that power supply to a certain electric device should not be stopped because timer is set in the electric device or that power supply to a certain electric device may be stopped because timer is not set in the electric device.

It is desirable to provide novel and improved power supply control apparatus, electric device, power supply control system, and power supply control method and program that can eliminate generation of standby power without degrading user's convenience.

According to an embodiment of the present technology, there is provided a power supply control apparatus including an opening/closing unit that is used for starting or stopping power supply to an electric device, a reception unit configured to receive power-supply-control information that is transmitted from the electric device, and a control unit configured to control the opening/closing unit based on the power-supply-control information that is received by the reception unit.

The control unit may include a power supply control unit configured to control the opening/closing unit based on opening/closing unit information of the opening/closing unit, which is included in the power-supply-control information, when the reception unit receives the power-supply-control information, so as to make the opening/closing unit stop the power supply to the electric device.

The power supply control unit may control the opening/closing unit based on power supply starting time information of the electric device, which is included in the power-supply-control information received by the reception unit, and current time information, when current time is on power supply starting time or later, so as to make the opening/closing unit start the power supply to the electric device.

The power supply control apparatus of the embodiment further includes a detection unit configured to detect a start request of the power supply to the electric device made by a user. The power supply control unit may control the opening/closing unit to make the opening/closing unit start the power supply to the electric device when there is the start request of the power supply to the electric device made by the user, in consequence of detection performed by the detection unit.

According to another embodiment of the present technology, there is provided an electric device including a power reception unit configured to receive power supply from a power supply control apparatus, a control unit configured to generate power-supply-control information when a user powers off the electric device, and a transmission unit configured to transmit the power-supply-control information generated by the control unit to the power supply control apparatus.

The electric device of the other embodiment further includes an opening/closing unit designation reception unit configured to receive designation, which is made by a user, of an opening/closing unit of the power supply control apparatus to which the electric device is connected, and a timer time setting reception unit configured to receive setting of timer time, the setting of timer time being made by the user, on which the electric device performs a predetermined operation. The control unit may include a generation unit configured to generate the power-supply-control information based on opening/closing unit information that is received by the opening/closing unit designation reception unit as information of the opening/closing unit that is designated and timer time information that is received by the timer time setting reception unit as information of timer time that is set.

The control unit may further include a calculation unit configured to calculate power supply starting time of the electric device for the electric device to be in a standby state on timer time, based on the timer time information and time information of time necessary from when the electric device is supplied with power to when the electric device becomes to be in the standby state, and the generation unit may generate the power-supply-control information based on the opening/closing unit information and power supply starting time information as information of the power supply starting time that is calculated by the calculation unit.

According to still another embodiment of the present technology, there is provided a power supply control system including a power supply control apparatus that includes an opening/closing unit that is used for starting or stopping power supply to an electric device, a reception unit configured to receive power-supply-control information that is transmitted from the electric device, and a first control unit configured to control the opening/closing unit based on the power-supply-control information that is received by the reception unit, and the electric device that includes a power reception unit configured to receive the power supply from the power supply control apparatus, a second control unit configured to generate the power-supply-control information when a user powers off the electric device, and a transmission unit configured to transmit the power-supply-control information generated by the second control unit to the power supply control apparatus.

According to yet another embodiment of the present technology, there is provided a power supply control method including the steps of generating power-supply-control information in an electric device when a user powers off the electric device, transmitting the power-supply-control information that is generated in the electric device in the generating step, to a power supply control apparatus, receiving the power-supply-control information transmitted from the electric device in the power supply control apparatus, controlling an opening/closing unit for starting or stopping power supply to the electric device, based on the power-supply-control information that is received by the power supply control apparatus in the receiving the step, and receiving the power supply from the power supply control apparatus in the electric device.

According to yet another embodiment of the present technology, there is provided a program that is used for making a power supply control apparatus function as an opening/closing unit that is used for starting or stopping power supply to an electric device, a reception unit configured to receive power-supply-control information that is transmitted from the electric device, and a first control unit configured to control the opening/closing unit based on the power-supply-control information that is received by the reception unit, and the electric device function as a power reception unit configured to receive the power supply from the power supply control apparatus, a second control unit configured to generate the power-supply-control information when a user powers off the electric device, and a transmission unit configured to transmit the power-supply-control information generated by the second control unit to the power supply control apparatus.

According to yet another embodiment of the present technology, there is provided a power supply control system including an opening/closing unit control apparatus that includes an opening/closing unit that is used for starting or stopping power supply to an electric device, a first control unit configured to control the opening/closing unit, and a first reception unit configured to receive a control signal that is transmitted from power supply administration apparatus and is used for controlling the opening/closing unit, the power supply administration apparatus that includes a second reception unit configured to receive power-supply-control information transmitted from the electric device, a second control unit configured to generate a control signal for controlling the opening/closing unit based on the power-supply-control information received by the second reception unit, and a first transmission unit configured to transmit the control signal generated by the second control unit to the opening/closing unit control apparatus, and the electric device that includes a power reception unit configured to receive the power supply from the opening/closing unit control apparatus, a third control unit configured to generate the power-supply-control information when a user powers off the electric device, and a second transmission unit configured to transmit the power-supply-control information generated by the third control unit to the power supply administration apparatus.

According to the embodiments of the present technology, generation of standby power can be eliminated without degrading user's convenience.
Various respective aspects and features of the invention are defined in the appended claims.

### BRIEF DESCRIPTION OF THE DRAWINGS

Fig. 1 is a block diagram showing the configuration of a power supply control system according to an embodiment of the present technology;
Fig. 2 is a block diagram showing the functional configuration of a control unit of a power supply control apparatus in Fig. 1;
Fig. 3 is a block diagram showing the functional configuration of a control unit of an electric device in Fig. 1;
Fig. 4 is a flowchart of power supply stop processing performed by the power supply control apparatus in Fig. 1;
Fig. 5 is a flowchart of power supply start processing performed by the power supply control apparatus in Fig. 1;
Fig. 6 is a flowchart of power-supply-control information transmission processing performed by the electric device in Fig. 1;
Fig. 7 illustrates an example of a table of power-supply-control information which is written in a power-supply-control information storage unit;
Fig. 8 illustrates an example of a power-supply-start request detection unit;
Fig. 9 illustrates an example of the power-supply-control information;
Fig. 10 illustrates opening/closing unit designation and timer time setting performed by a user in the electric device in Fig. 1;
Fig. 11 illustrates the opening/closing unit designation and the timer time setting performed by a user in the electric device in Fig. 1;
Fig. 12 illustrates the opening/closing unit designation and the timer time setting performed by a user in the electric device in Fig. 1;
Fig. 13 illustrates the opening/closing unit designation and the timer time setting performed by a user in the electric device in Fig. 1; and
Fig. 14 is a block diagram showing the configuration of a power supply control system according to another embodiment of the present technology.

### DETAILED DESCRIPTION OF EMBODIMENTS

Preferred embodiments of the present technology will be described in detail with reference to the accompanying drawings. Here, in this specification and the drawings, elements having substantially the same functional configurations as each other are given the same reference characters and thus duplicative descriptions thereof are omitted.

The description is given in the following order.
1. Power Supply Control System (Embodiment)
2. Power Supply Stop Processing
3. Power Supply Start Processing
4. Power-Supply-Control Information Transmission Processing
5. Opening/Closing Unit Designation and Timer Time Setting By User
6. Power Supply Control System (Another Embodiment)

### [1. Power Supply Control System (Embodiment)]

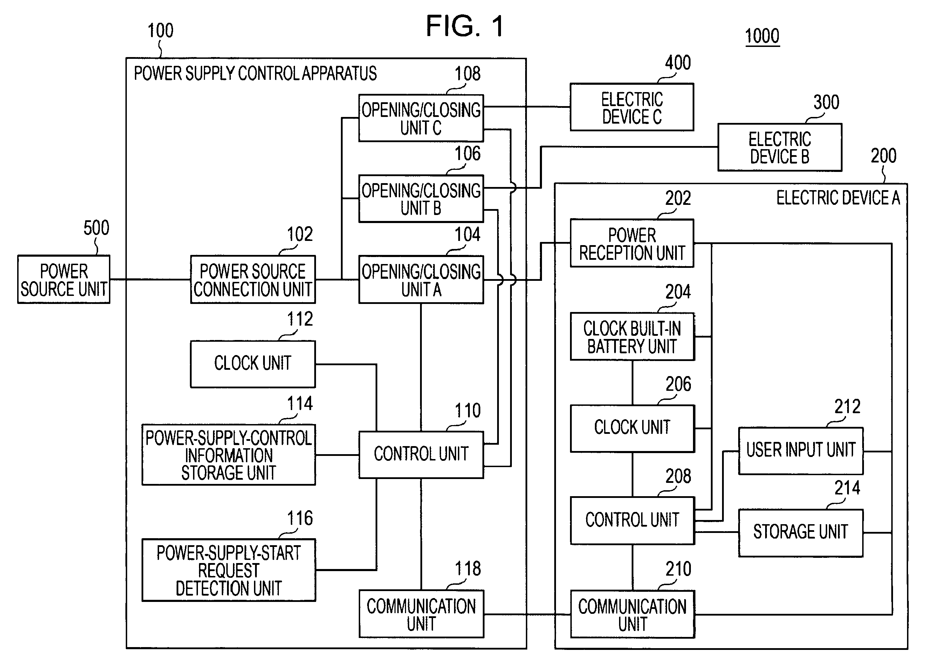

A power supply control system according to an embodiment of the present technology is first described. Fig. 1 is a block diagram showing the configuration of a power supply control system according to the embodiment.

Referring to Fig. 1, this power supply control system 1000 includes a power supply control apparatus 100, an electric device A 200, an electric device B 300, an electric device C 400, and a power source unit 500. In this embodiment, the power supply control apparatus 100 performs power supply control of three electric devices (the electric device A 200, the electric device B 300, and the electric device C 400). However, the number of electric devices which are controlled by the power supply control apparatus 100 is not limited to three.

The power supply control apparatus 100 is individually connected with the power source unit 500, the electric device A 200, the electric device B 300, and the electric device C 400. The power supply control apparatus 100 controls whether power supplied from the power source unit 500 is supplied to the electric device A 200 or not, for example. The power supply control apparatus 100 includes a power source connection unit 102, an opening/closing unit A 104, an opening/closing unit B 106, an opening/closing unit C 108, a control unit 110, a clock unit 112, a power-supply-control information storage unit 114, a power-supply-start request detection unit 116, and a communication unit 118.

The power source connection unit 102 can be connected with the power source unit 500. The power source connection unit 102 is a connector which is connected with a power source apparatus or a power point which is provided on a wall or the like, for example. The opening/closing unit A 104 can be connected with the electric device A 200 and control power supply to the electric device A 200. The opening/closing unit B 106 can be connected with the electric device B 300 and control power supply to the electric device B 300. The opening/closing unit C 108 can be connected with the electric device C 400 and control power supply to the electric device C 400.

The control unit 110 can control respective units of the power supply control apparatus 100. The clock unit 112 can supply current time information to the control unit 110.

The power-supply-control information storage unit 114 can store later-described power-supply-control information which is received by the power supply control apparatus 100. The power-supply-start request detection unit 116 is an example of a detection unit of the embodiment of the present technology and can detect a start request of power supply to the electric device A 200 made by a user, for example. The communication unit 118 is an example of a reception unit of the embodiment of the present technology and can receive power-supply-control information which is transmitted from the electric device A 200, for example.

The electric device A 200 includes a power reception unit 202, a clock built-in battery unit 204, a clock unit 206, a control unit 208, a communication unit 210, a user input unit 212, and a storage unit 214.

The power reception unit 202 is an example of a power reception unit of the embodiment of the present technology. The power reception unit 202 can be connected with the opening/closing unit A 104 and receive power supply from the opening/closing unit A 104 so as to distribute power to respective units of the electric device A 200. The clock built-in battery unit 204 can supply power to the clock unit 206 so that the clock unit 206 can keep current time.

The clock unit 206 can supply current time information to the control unit 208. The control unit 208 can control respective units of the electric device A 200. The communication unit 210 is an example of a transmission unit of the embodiment of the present technology and can transmit power-supply-control information to the power supply control apparatus 100, for example.

The user input unit 212 is an example of an opening/closing unit designation reception unit and a timer time setting reception unit of the embodiment of the present technology. The user input unit 212 is used so that the user designates the opening/closing unit A 104 of the power supply control apparatus 100 to which the electric device A 200 is connected, and so that the user sets timer time. The storage unit 214 can store opening/closing unit information which is information of an opening/closing unit designated through the user input unit 212, and timer time information which is information of timer time set through the user input unit 212.

The electric device B 300 and the electric device C 400 have the same configurations as the configuration of the electric device A 200. The power source unit 500 can supply power. The power source unit 500 is a power source apparatus or a power point which is provided on a wall or the like, for example.

The power source unit 500 and the power source connection unit 102 are connected with each other by a power cable. Further, the opening/closing unit A 104 and the power reception unit 202 are connected with each other by a power cable. The communication unit 118 and the communication unit 210 may be connected with each other by a local area network (LAN), for example, which is commonly used in houses as well. In this case, the communication unit 118 and the communication unit 210 may employ an interface of Ethernet®.

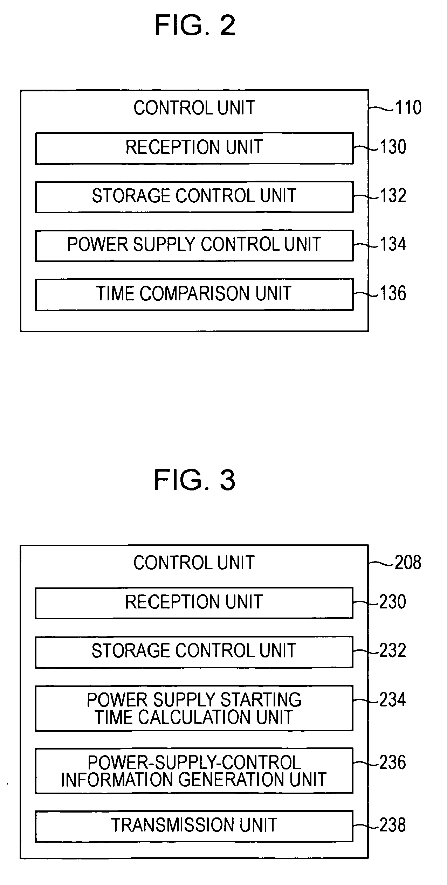

The functional configuration of the control unit 110 of the power supply control apparatus 100 shown in Fig. 1 is now described. Fig. 2 is a block diagram showing the functional configuration of the control unit 110 of the power supply control apparatus 100 shown in Fig. 1.

Referring to Fig. 2, the control unit 110 includes a reception unit 130, a storage control unit 132, a power supply control unit 134, and a time comparison unit 136.

The reception unit 130 receives power-supply-control information received by the communication unit 118. Further, the reception unit 130 receives a detection result provided by the power-supply-start request detection unit 116.

The storage control unit 132 writes the power-supply-control information received by the reception unit 130 in the power-supply-control information storage unit 114. Further, the storage control unit 132 reads out the power-supply-control information from the power-supply-control information storage unit 114.

When the reception unit 130 receives the power-supply-control information, the power supply control unit 134 transmits a control signal for making the opening/closing unit A 104 stop power supply, for example. Further, when a user makes a start request of power supply to the electric device A 200, for example, the power supply control unit 134 transmits a control signal for making the opening/closing unit A 104 start power supply based on a detection result which is received by the reception unit 130 and provided by the power-supply-start request detection unit 116. Further, when current time is on power supply starting time or later in consequence of comparison by the time comparison unit 136 which is described later, the power supply control unit 134 transmits a control signal for making the opening/closing unit A 104 start power supply, for example.

The time comparison unit 136 compares current time with power supply starting time based on power supply starting time information included in the power-supply-control information which is read by the storage control unit 132 and current time information which is supplied from the clock unit 112.

The functional configuration of the control unit 208 of the electric device A 200 shown in Fig. 1 is now described. Fig. 3 is a block diagram showing the functional configuration of the control unit 208 of the electric device A 200 in Fig. 1.

Referring to Fig. 3, the control unit 208 includes a reception unit 230, a storage control unit 232, a power supply starting time calculation unit 234, a power-supply-control information generation unit 236, and a transmission unit 238.

The reception unit 230 receives opening/closing unit information and timer time information which are inputted by a user through the user input unit 212.

The storage control unit 232 makes the storage unit 214 store timer setting information including the opening/closing unit information and timer time information which are received by the reception unit 230. Further, when the electric device A 200 is powered off by a user, the storage control unit 232 reads out the latest timer setting information from the storage unit 214.

The power supply starting time calculation unit 234 is an example of a calculation unit of the embodiment of the present technology. The power supply starting time calculation unit 234 calculates power supply starting time for the electric device A 200 to be in a standby state on timer time, based on timer time information which is read out by the storage control unit 232 and included in the timer setting information and time information of time which is necessary from when the electric device A 200 is supplied with power to when the electric device A 200 becomes to be in the standby state.

The power-supply-control information generation unit 236 is an example of a generation unit of the embodiment of the present technology. The power-supply-control information generation unit 236 generates power-supply-control information that includes opening/closing unit information which is included in the timer setting information read by the storage control unit 232 and power supply starting time information which is information of power supply starting time calculated by the power supply starting time calculation unit 234.

The transmission unit 238 transmits the power-supply-control information generated by the power-supply-control information generation unit 236 to the power supply control apparatus 100.

### [2. Power Supply Stop Processing]

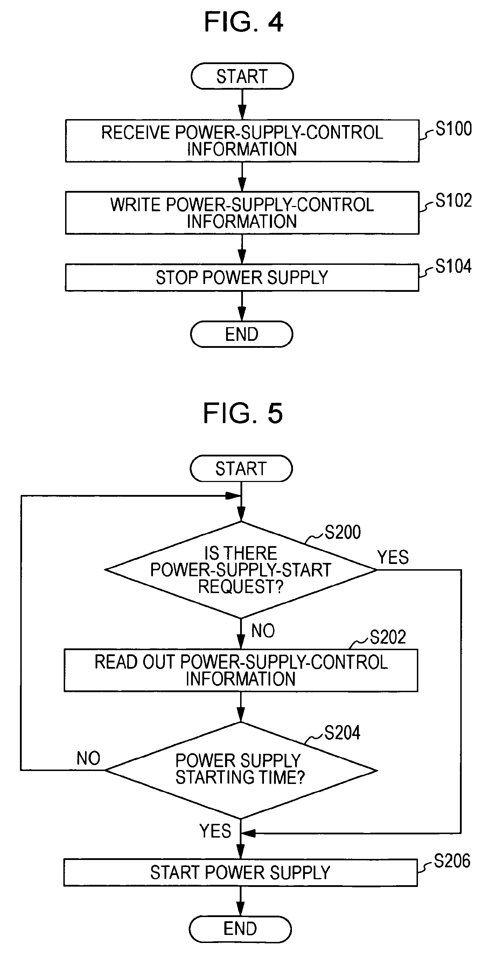

Power supply stop processing performed by the power supply control apparatus 100 shown in Fig. 1 is now described. Fig. 4 is a flowchart of the power supply stop processing performed by the power supply control apparatus 100 in Fig. 1.

Referring to Fig. 4, the communication unit 118 of the power supply control apparatus 100 receives power-supply-control information from the electric device A 200 (step S100). The power-supply-control information includes opening/closing unit information and power supply starting time information.

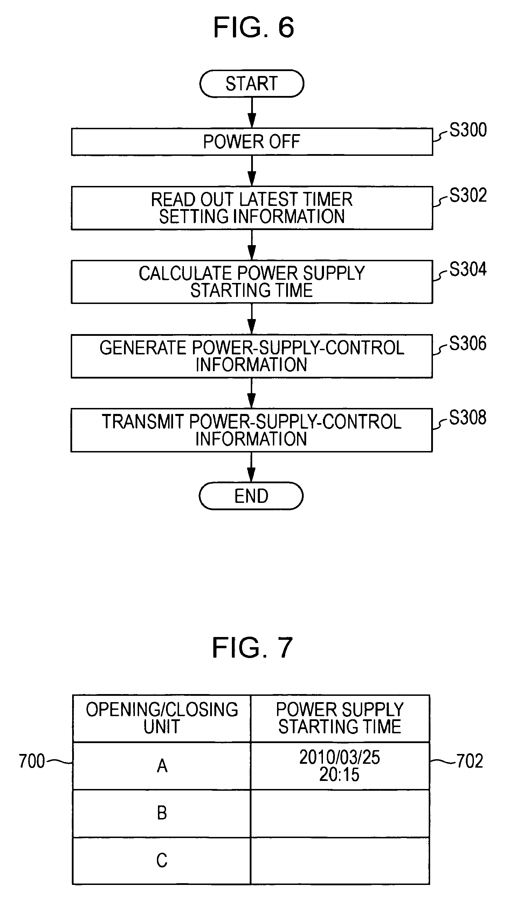

Subsequently, the control unit 110 of the power supply control apparatus 100 writes the power-supply-control information received by the communication unit 118 in step S100 in the power-supply-control information storage unit 114 (step S102). Fig. 7 illustrates an example of a table of power-supply-control information written in the power-supply-control information storage unit 114. As shown in Fig. 7, opening/closing unit information 700 and power supply starting time information 702 are written in the table of the power-supply-control information. In Fig. 7, the power supply starting time with respect to the opening/closing unit A 104 is March 25, 2010, 20:15. When current time becomes March 25, 2010, 20:15, power supply to the electric device A 200 which is connected with the opening/closing unit A 104 is started as described later.

Then, the control unit 110 transmits a control signal for making the opening/closing unit A 104 stop the power supply, to the opening/closing unit A 104, and the opening/closing unit A 104 stops the power supply to the electric device A 200 (step S104), ending the processing.

According to the power supply stop processing of Fig. 4, the power supply to the electric device A 200 is stopped when the electric device A 200 transmits the power-supply-control information to the power supply control apparatus 100, being able to eliminate generation of standby power without degrading user's convenience.

### [3. Power Supply Start Processing]

Power supply start processing performed by the power supply control apparatus 100 shown in Fig. 1 is now described. Fig. 5 is a flowchart of the power supply start processing performed by the power supply control apparatus 100 in Fig. 1.

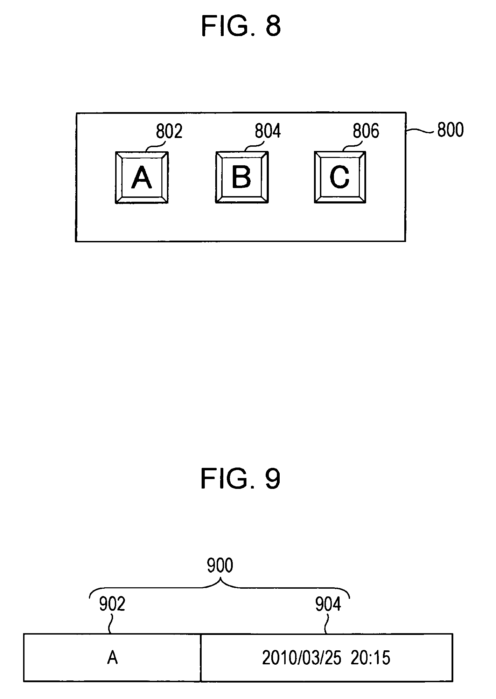

In Fig. 5, the control unit 110 of the power supply control apparatus 100 determines whether there is a start request of power supply to the electric device A 200 made by a user, based on a detection result obtained by the power-supply-start request detection unit 116 (step S200). Fig. 8 illustrates an example of the power-supply-start request detection unit 116. As shown in Fig. 8, a power-supply-start request detection unit 800 as the power-supply-start request detection unit 116 includes a button 802 indicating the opening/closing unit A 104, a button 804 indicating the opening/closing unit B 106, and a button 806 indicating the opening/closing unit C 108. In Fig. 8, when the button 802 is pressed by a user, for example, power supply to the electric device A 200 which is connected with the opening/closing unit A 104 is started as described later.

When there is no start request of power supply to the electric device A 200 made by the user in consequence of the determination in step S200 (NO in step S200), the control unit 110 reads out the power-supply-control information from the power-supply-control information storage unit 114 (step S202).

Subsequently, the control unit 110 determines whether current time is on the power supply starting time or later, based on the power supply starting time information included in the power-supply-control information read out in step S202 and current time information supplied from the clock unit 112 (step S204).

When the current time is not on the power supply starting time or later in consequence of the determination in step S204, that is, when the current time is time before the power supply starting time (NO in step S204), the processing returns to step S200.

When there is the start request of power supply to the electric device A 200 made by the user in consequence of the determination in step S200 (YES in step S200) or when the current time is on the power supply starting time or later (YES in step S204) in consequence of the determination in step S204, the control unit 110 transmits a control signal for making the opening/closing unit A 104 start the power supply, to the opening/closing unit A 104 and the opening/closing unit A 104 starts the power supply to the electric device A 200 (step S206), ending the processing.

According to the power supply start processing of Fig. 5, when there is a start request of power supply to the electric device A 200 made by a user, or when the current time is on the power supply starting time or later, the power supply to the electric device A 200 is started, being able to eliminate generation of standby power without degrading user's convenience.

When the power supply is started, the electric device A 200 reads out the timer time information from the storage unit 214, and starts a predetermined operation when the current time becomes the timer time, based on the timer time information which is read out and the current time information supplied from the clock unit 206.

In step S202, the control unit 110 reads out the power-supply-control information from the power-supply-control information storage unit 114, but may read out only power supply starting time information included in the power-supply-control information from the power-supply-control information storage unit 114.

### [4. Power-Supply-Control Information Transmission Processing]

Power-supply-control information transmission processing performed by the electric device A 200 shown in Fig. 1 is now described. Fig. 6 is a flowchart showing the power-supply-control information transmission processing performed by the electric device A 200 in Fig. 1.

In Fig. 6, when the electric device A 200 is powered off by a user (step S300), the control unit 208 of the electric device A 200 reads out the latest timer setting information from the storage unit 214 (step S302).

Subsequently, the control unit 208 calculates power supply starting time for the electric device A 200 to be in a standby state on timer time, based on the timer time information included in the timer setting information read out in step S302 and time information of time necessary from when the electric device A 200 is supplied with power to when the electric device A 200 becomes to be in the standby state (step S304). For example, the control unit 208 sets time which is earlier than the timer time by a time interval necessary from when the electric device A 200 is supplied with power to when the electric device A 200 becomes to be in the standby state, as power supply starting time. For example, when the timer time is March 25, 2010, 20:18 and the time interval necessary from when the electric device A 200 is supplied with power to when the electric device A 200 becomes to be in the standby state is three minutes, the control unit 208 calculates March 25, 2010, 20:15 as the power supply starting time.

Then, the control unit 208 generates power-supply-control information including the opening/closing unit information included in the timer setting information read out in step S302 and the power supply starting time information as information of the power supply starting time calculated in step S304 (step S306). Fig. 9 illustrates an example of the power-supply-control information. As shown in Fig. 9, power-supply-control information 900 includes opening/closing unit information 902 and power supply starting time information 904. In Fig. 9, when current time becomes March 25, 2010, 20:15, power supply to the electric device A 200 which is connected with the opening/closing unit A 104 is started as described above.

Then, the communication unit 210 of the electric device A 200 transmits the power-supply-control information which is generated by the control unit 208 in step S306 to the power supply control apparatus 100 (step S308), ending the processing.

According to the power-supply-control information transmission processing of Fig. 6, when the electric device A 200 is powered off by a user, power-supply-control information is transmitted to the power supply control apparatus 100. As described above, when the power-supply-control information is transmitted to the power supply control apparatus 100, power supply to the electric device A 200 is stopped, being able to eliminate generation of standby power without degrading user's convenience.

In step S306, power-supply-control information including opening/closing unit information and power supply stating time information is generated. However, in a case where the electric device A 200 becomes to be in the standby state immediately after being supplied with power, for example, power-supply-control information including opening/closing unit information and timer time information may be generated.

### [5. Opening/Closing Unit Designation and Timer Time Setting By User]

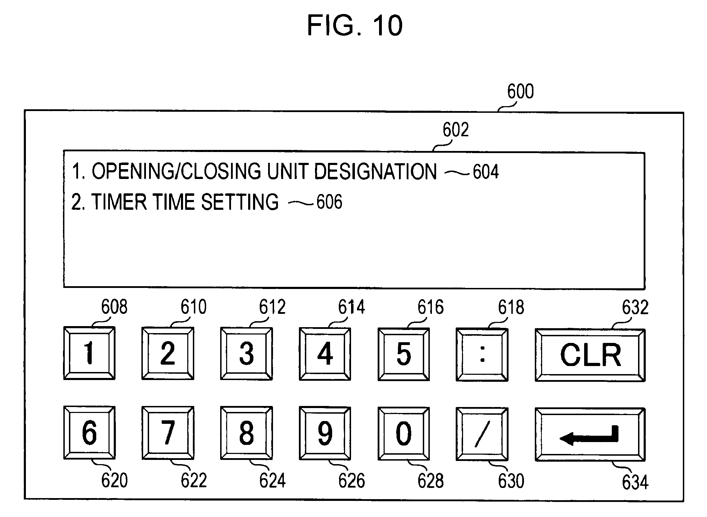

Opening/closing unit designation and timer time setting by a user performed in the electric device A 200 of Fig. 1 is now described. Figs. 10 to 13 illustrate the opening/closing unit designation and the timer time setting by a user performed in the electric device A 200 of Fig. 1.

Referring to Fig. 10, a user input unit 600 serving as the user input unit 212 includes a display unit 602 showing information to a user, buttons 608, 610, 612, 614, 616, 618, 620, 622, 624, 626, 628, and 630 which are used by a user for inputting information, a button 632 which is used by the user for deleting information that the user partially inputs, and a button 634 which is used for determining the information which is inputted by the user.

In Fig. 10, the display unit 602 displays "1. OPENING/CLOSING UNIT DESIGNATION" 604 for designating the opening/closing unit A 104 to which the electric device A 200 is connected and "2. TIMER TIME SETTING" 606 for setting timer time on which the electric device A 200 conducts a predetermined operation, as information that can be inputted by the user. In Fig. 10, the opening/closing unit designation can be performed by pressing the button 608, and the timer time setting can be performed by pressing the button 610.

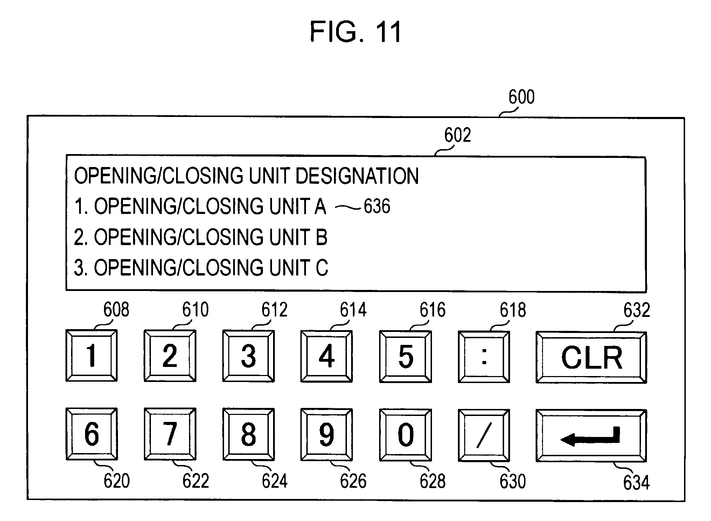

When the button 608 is pressed by the user for designating the opening/closing unit in Fig. 10, information displayed on the display unit 602 is changed as shown in Fig. 11.

In Fig. 11, the display unit 602 displays a display for promoting designation of an opening/closing unit, "1. OPENING/CLOSING UNIT A" 636 by which the user designates the opening/closing unit A 104, and the like. In Fig. 11, the opening/closing unit A can be designated by pressing the button 608.

In Fig. 11, when the user presses the button 608 to designate the opening/closing unit A, the control unit 208 makes the storage unit 214 store opening/closing unit information as information of the opening/closing unit A which is designated by the user. Then, information displayed on the display unit 602 is returned to be the information shown in Fig. 10.

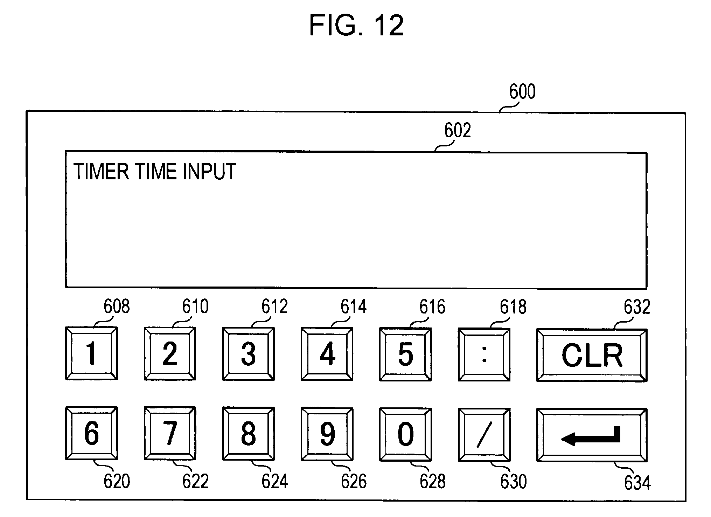

In Fig. 10, when the user presses the button 610 to set timer time, information displayed on the display unit 602 is changed as shown in Fig. 12.

In Fig. 12, the display unit 602 displays a display for promoting an input of timer time. In Fig. 12, time and date can be inputted by pressing the buttons 608, 610, 612, 614, 616, 618, 620, 622, 624, 626, 628, and 630.

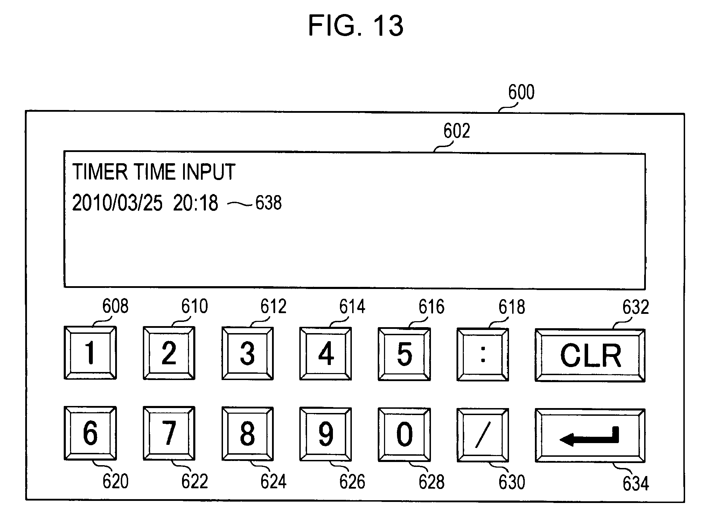

Fig. 13 illustrates a case where a user inputs March 25, 2010, 20:18 as timer time. In Fig. 13, the display unit 602 displays a display promoting an input of timer time and "2010/03/25 20:18" 638 as inputted timer time. In Fig. 13, when the user makes an erroneous input, for example, and wants to delete the inputted information, the display can be returned to the state shown in Fig. 12 by pressing the button 632. Further, in Fig. 13, when the button 634 is pressed, inputted information can be determined.

In Fig. 13, when the user presses the button 634 to determine the timer time, the control unit 208 makes the storage unit 214 store the timer time information, which is inputted by the user, as information of timer time.
Then, the information displayed on the display unit 602 returns to the information shown in Fig. 10.

Here, in the storage unit 214, the opening/closing unit information and the timer time information are stored as timer setting information. That is, the timer setting information includes the opening/closing unit information and the timer time information, and the timer setting information is stored in the storage unit 214 at timing on which the timer time information is stored in the storage unit 214. Here, the user does not have to designate an opening/closing unit every time, but if the user once designates an opening/closing unit, information of the opening/closing unit which is previously designated is used in the timer time setting.

According to the embodiment, the user can easily designate an opening/closing unit and set timer time.

### [6. Power Supply Control System (Another Embodiment)]

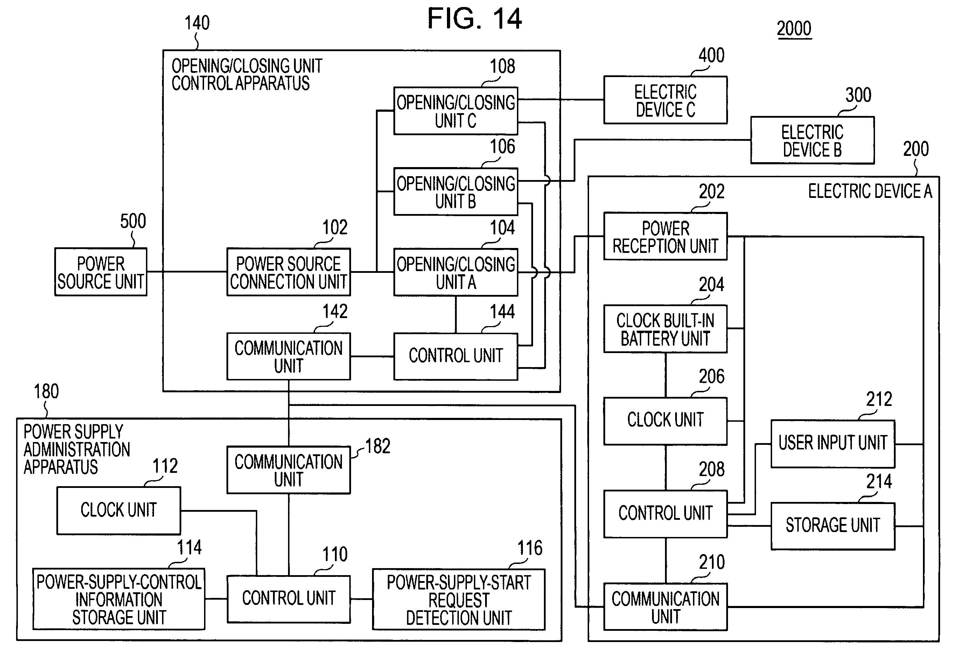

A power supply control system according to another embodiment of the present technology is now described. Fig. 14 is a block diagram showing the configuration of a power supply control system according to the other embodiment of the present technology. The power supply control system according to the other embodiment of the present technology has the same configuration as that of the power supply control system of the embodiment described above except that the power supply control apparatus 100 is separated to an opening/closing unit control apparatus 140 and a power supply administration apparatus 180. Therefore, descriptions of duplicate configurations and functions are omitted, and different configurations and functions are described below.

Referring to Fig. 14, this power supply control system 2000 includes the opening/closing unit control apparatus 140, the power supply administration apparatus 180, an electric device A 200, an electric device B 300, an electric device C 400, and a power source unit 500.

The opening/closing unit control apparatus 140 includes a power source connection unit 102, an opening/closing unit A 104, an opening/closing unit B 106, an opening/closing unit C 108, a communication unit 142, and a control unit 144.

The communication unit 142 can receive a control signal which is transmitted from the power supply administration apparatus 180 and is used for making the opening/closing unit A 104 stop power supply and a control signal which is used for making the opening/closing unit A 104 start the power supply. The control unit 144 can control respective units of the opening/closing unit control apparatus 140. Further, the control unit 144 can transmit the control signal received by the communication unit 142 to the opening/closing unit A 104 and the like.

The power supply administration apparatus 180 includes a control unit 110, a clock unit 112, a power-supply-control information storage unit 114, a power-supply-start request detection unit 116, and a communication unit 182.

The control unit 110 can control respective units of the power supply administration apparatus 180. The communication unit 182 can receive power-supply-control information transmitted from the electric device A 200, for example. Further, the communication unit 182 can transmit a control signal for making the opening/closing unit A 104 stop power supply, and a control signal for making the opening/closing unit A 104 start the power supply, for example, to the opening/closing unit control apparatus 140.

A communication unit 210 of the electric device A 200 can transmit power-supply-control information to the power supply administration apparatus 180, for example.

According to the embodiment, the opening/closing unit control apparatus 140 and the power supply administration apparatus 180 perform the power supply stop processing described above with reference to Fig. 4 and the power supply start processing described above with reference to Fig. 5, and the electric device A 200 performs the power-supply-control information transmission processing described above with reference to Fig. 6, being able to provide the same advantageous effect as that in the embodiment described first.

Further, according to the embodiment, if the function of the power supply administration apparatus 180 is built in a home server (not shown) at home, for example, and an existing apparatus is used as the opening/closing unit control apparatus 140, the power supply control system 2000 can be realized. Thus, the embodiment can be easily performed.

The respective embodiments of the present technology may be realized such that a storage medium storing program codes of software for realizing the functions of the respective embodiments described above is supplied to a system or an apparatus, and a computer (or a CPU, an MPU, and the like) of the system or the apparatus reads out and performs the program codes stored in the storage medium.

In this case, the program codes which are read out from the storage medium realize the functions of the respective embodiments described above, and the program codes and the storage medium storing the program codes constitute the embodiments of the present technology.

Examples of the storage medium for supplying program codes include a floppy® disk, a hard disk, a magnet-optical disk, an optical disk such as a CD-ROM, a CD-R, a CD-RW, a DVD-ROM, a DVD-RAM, a DVD-RW, and a DVD+RW, a magnetic tape, a nonvolatile memory card, a ROM, and the like. Alternatively, program codes may be downloaded through a network.

The functions of the respective embodiments described above are realized by performing the program code which is read out by the computer. In addition, the functions of the respective embodiments described above are realized by performing a part or a whole of actual processing by an operating system (OS) or the like operating on the computer, based on a direction of the program code.

Furthermore, after the program code which is read out from the storage medium is written in a memory which is provided to a feature expansion board inserted into the computer or a feature expansion unit connected to the computer, a CPU or the like provided to the expansion board or the expansion unit performs a part or a whole of actual processing of the expansion function, based on the direction of the program code. Thus, the functions of the respective embodiments described above are realized through the processing.

The preferred embodiments of the present technology have been described in detail with reference to the accompanying drawings, but embodiments of the present technology are not limited to these examples. It is apparent for those skilled in the art to understand that various alterations or modifications occur within the technical scope of the embodiments of the present technology, and it should be understand these alterations and the modifications are within the technical scope of the present technology.

The present disclosure contains subject matter related to that disclosed in Japanese Priority Patent Application JP 2010-221549 filed in the Japan Patent Office on September 30, 2010, the entire contents of which are hereby incorporated by reference.
In so far as the embodiments of the invention described above are implemented, in particular the described methods, at least in part, using software-controlled data processing apparatus, it will be appreciated that a computer program providing such software control and a transmission, storage or other medium by which such a computer program is provided are envisaged as aspects of the present invention.

## Claims

1. A power supply control apparatus, comprising:
an opening/closing unit that is used for starting or stopping power supply to an electric device;
a reception unit configured to receive power-supply-control information that is transmitted from the electric device; and
a control unit configured to control the opening/closing unit based on the power-supply-control information that is received by the reception unit.

2. The power supply control apparatus according to Claim 1, wherein the control unit includes a power supply control unit configured to control the opening/closing unit based on opening/closing unit information of the opening/closing unit, the opening/closing unit information being included in the power-supply-control information, when the reception unit receives the power-supply-control information, so as to make the opening/closing unit stop the power supply to the electric device.

3. The power supply control apparatus according to Claim 2, wherein the power supply control unit controls the opening/closing unit based on power supply starting time information of the electric device, the power supply starting time information being included in the power-supply-control information received by the reception unit, and current time information, when current time is on power supply starting time or later, so as to make the opening/closing unit start the power supply to the electric device.

4. The power supply control apparatus according to Claim 3, further comprising:
a detection unit configured to detect a start request of the power supply to the electric device made by a user; wherein
the power supply control unit controls the opening/closing unit to make the opening/closing unit start the power supply to the electric device when there is the start request of the power supply to the electric device made by the user, in consequence of detection performed by the detection unit.

5. An electric device, comprising:
a power reception unit configured to receive power supply from a power supply control apparatus;
a control unit configured to generate power-supply-control information when a user powers off the electric device; and
a transmission unit configured to transmit the power-supply-control information generated by the control unit to the power supply control apparatus.

6. The electric device according to Claim 5, further comprising:
an opening/closing unit designation reception unit configured to receive designation, the designation being made by a user, of an opening/closing unit of the power supply control apparatus to which the electric device is connected; and
a timer time setting reception unit configured to receive setting of timer time, the setting of timer time being made by the user, on which the electric device performs a predetermined operation; wherein
the control unit includes a generation unit configured to generate the power-supply-control information based on opening/closing unit information that is received by the opening/closing unit designation reception unit as information of the opening/closing unit that is designated and timer time information that is received by the timer time setting reception unit as information of timer time that is set.

7. The electric device according to Claim 6, wherein
the control unit further includes a calculation unit configured to calculate power supply starting time of the electric device for the electric device to be in a standby state on timer time, based on the timer time information and time information of time necessary from when the electric device is supplied with power to when the electric device becomes to be in the standby state, and
the generation unit generates the power-supply-control information based on the opening/closing unit information and power supply starting time information as information of the power supply starting time that is calculated by the calculation unit.

8. A power supply control system, comprising:
a power supply control apparatus including
an opening/closing unit that is used for starting or stopping power supply to an electric device,
a reception unit configured to receive power-supply-control information that is transmitted from the electric device, and
a first control unit configured to control the opening/closing unit based on the power-supply-control information that is received by the reception unit; and
the electric device including
a power reception unit configured to receive the power supply from the power supply control apparatus,
a second control unit configured to generate the power-supply-control information when a user powers off the electric device, and
a transmission unit configured to transmit the power-supply-control information generated by the second control unit to the power supply control apparatus.

9. A power supply control method, comprising the steps of:
generating power-supply-control information in an electric device when a user powers off the electric device;
transmitting the power-supply-control information that is generated in the electric device in the generating step, to a power supply control apparatus;
receiving the power-supply-control information transmitted from the electric device in the power supply control apparatus;
controlling an opening/closing unit for starting or stopping power supply to the electric device, based on the power-supply-control information that is received by the power supply control apparatus in the receiving step; and
receiving the power supply from the power supply control apparatus in the electric device.

10. A program that is used for making:
a power supply control apparatus function as
an opening/closing unit that is used for starting or stopping power supply to an electric device,
a reception unit configured to receive power-supply-control information that is transmitted from the electric device, and
a first control unit configured to control the opening/closing unit based on the power-supply-control information that is received by the reception unit; and
the electric device function as
a power reception unit configured to receive the power supply from the power supply control apparatus,
a second control unit configured to generate the power-supply-control information when a user powers off the electric device, and
a transmission unit configured to transmit the power-supply-control information generated by the second control unit to the power supply control apparatus.

11. A power supply control system, comprising:
an opening/closing unit control apparatus including
an opening/closing unit that is used for starting or stopping power supply to an electric device,
a first control unit configured to control the opening/closing unit, and
a first reception unit configured to receive a control signal that is transmitted from power supply administration apparatus and is used for controlling the opening/closing unit;
the power supply administration apparatus including
a second reception unit configured to receive power-supply-control information transmitted from the electric device,
a second control unit configured to generate a control signal for controlling the opening/closing unit based on the power-supply-control information received by the second reception unit, and
a first transmission unit configured to transmit the control signal generated by the second control unit to the opening/closing unit control apparatus; and
the electric device including
a power reception unit configured to receive the power supply from the opening/closing unit control apparatus,
a third control unit configured to generate the power-supply-control information when a user powers off the electric device, and
a second transmission unit configured to transmit the power-supply-control information generated by the third control unit to the power supply administration apparatus.
